# DEMANDE DE BREVET EUROPEEN

(11) **EP 1 447 188 A1**
(43) Date de publication de la demande: **18.08.2004**
(21) Numéro de dépôt: 03356213.3
(22) Date de dépôt: 30.12.2003
(51) Int. Cl.: B27B 9/04, B23Q 9/00, B23D 59/00, B28D 1/18

(54) **Guide de verticalité pour tronçonneuse**

(30) Priorité: 13.02.2003 FR 0301897
(71) Demandeur: M.B.H. Developpement, 42120 St. Vincent de Boisset (FR)
(72) Inventeur: Bottazzi, Marc, 42120 Saint Vincent de Boisset (FR)
(74) Mandataire: Dupuis, François

(57) **Abrégé**

Le guide de verticalité pour tronçonneuse est remarquable en ce qu'il s'adapte à la fixation temporaire sur la bande de dégagement (5c) de la bordure périphérique (5b) d'un carter de protection (5) de l'outil de coupe de l'appareil électroportatif, et en ce que le guide (10) se présente sous la forme d'une agrafe à deux branches (10a, 10b), agencée pour s'engager élastiquement autour de la bande de dégagement (5c) de la bordure périphérique dudit carter et être maintenue en position, ladite agrafe présentant une forme profilée (10c) en prolongement formant un plan d'appui, de pivotement et de glissement sur le produit (P) à découper.

## Description

L'invention se rattache au secteur technique des machines électroportatives et outillages portatifs, notamment les tronçonneuses utilisables pour la découpe de produits divers, en tous matériaux.

De très nombreux constructeurs proposent des appareils électroportatifs, dans lesquels sont disposés des meules, outils de coupe circulaire pour la découpe de divers produits et matières, l'appareil étant manipulé manuellement par l'opérateur. La découpe s'effectue ainsi, selon l'expression consacrée dans le milieu professionnel concerné, par l'expression « tronçonnage à la volée ». Cela suggère donc que l'opérateur tenant l'appareil électroportatif, suit le tracé identifié sur le produit à découper afin d'obtenir les formes désirées.

Le problème posé réside dans le fait que ce tronçonnage dit « à la volée » implique une grande maîtrise de la tenue de l'appareillage par l'opérateur pour assurer la découpe du produit dans un plan perpendiculaire et vertical en égard de son positionnement et de sa surface à découper. Cette maîtrise de tenue de l'appareillage n'étant pas généralisée, les constructeurs ont été contraints de mettre au point des appareillages et accessoires complémentaires dits « guides de verticalité ».

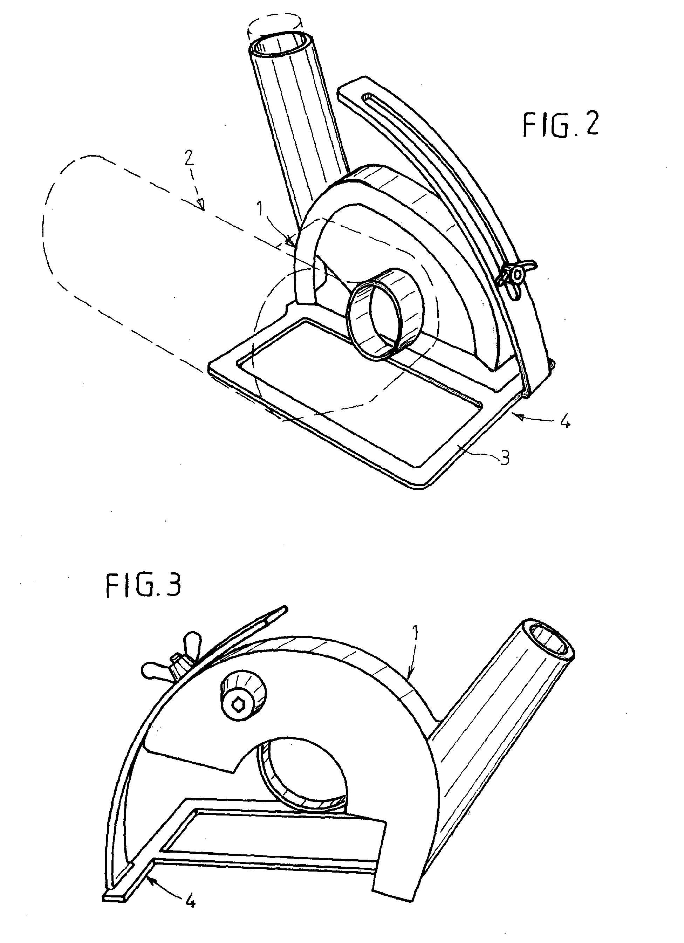

En pratique, comme représenté aux figures 2 et 3 des dessins, à titre d'exemple non limitatif, il s'agit d'un bâti (1) qui est susceptible de recevoir en position l'appareillage (2) électroportatif, et de présenter une surface d'appui (3) conséquente sur le produit à tronçonner, à partir d'un cadre (4) par exemple, permettant ainsi une bonne répartition de la surface d'appui, facilitant la stabilité de l'ensemble et donc la verticalité.

Par ailleurs, les accessoires précités présentent une forme en poignée permettant la saisie et le maintien par l'opérateur. C'est ensuite cet ensemble qui est déplacé et guidé sur le produit à découper ou à tronçonner. Ce type de matériel est d'une part encombrant, lourd, peu pratique à manipuler, et ne permet pas toujours d'assurer des découpes de profils complexes. Son coût de réalisation reste élevé.

Face à cette situation, la démarche du demandeur a été de rechercher une solution originale et simple, standardisée à tout type de matériel, alors qu'actuellement sur le marché, les guides de verticalité utilisés sont spécifiques à chacun des constructeurs d'appareillages électroportatifs, ce qui n'est pas toujours très pratique pour les utilisateurs.

La démarche du demandeur a donc été de rechercher la conception d'un guide de verticalité de mise en oeuvre simple qui puisse s'adapter sur tous appareillages électroportatifs actuels.

La démarche inventive de demandeur a tout d'abord été d'examiner quelle était la configuration des appareils électroportatifs actuellement sur le marché, afin d'identifier une base commune de conception.

Cette démarche a abouti à constater que pour chacun des appareils électroportatifs, il y avait un carter de protection (5) autour de l'outil de coupe (6), ce carter de protection étant généralement semi-circulaire ou selon un secteur angulaire sensiblement plus important, avec une plaque horizontale (5a) correspondant à la face plane de l'outil, et une bordure circulaire (5b) de protection établie selon un secteur angulaire considéré et perpendiculaire à la plaque horizontale. Cette bordure de protection est établie pour avoir une bande de dégagement ayant une largeur (5c) suffisante de part et d'autre de la zone dentelée de coupe, c'est-à-dire qu'en pratique, cette zone est de l'ordre de 1 à 4 cm selon les modèles considérés d'appareils électroportatifs.

A partir de cela, et selon une première caractéristique, l'invention vise à réaliser un guide de verticalité qui est remarquable en ce qu'il s'adapte à la fixation temporaire sur la bande de dégagement de la bordure périphérique du carter de protection de l'outil de coupe de l'appareil électroportatif, et en ce que le guide se présente sous la forme d'une agrafe à deux branches, agencée pour s'engager élastiquement autour de la bande de dégagement de la bordure périphérique dudit carter et être maintenue en position, ladite agrafe présentant une forme profilée en prolongement formant un plan d'appui, de pivotement et de glissement sur le produit à découper.

Ces caractéristiques et d'autres encore ressortiront bien de la suite de la description.

Pour fixer l'objet de l'invention illustré d'une manière non limitative aux figures des dessins où :

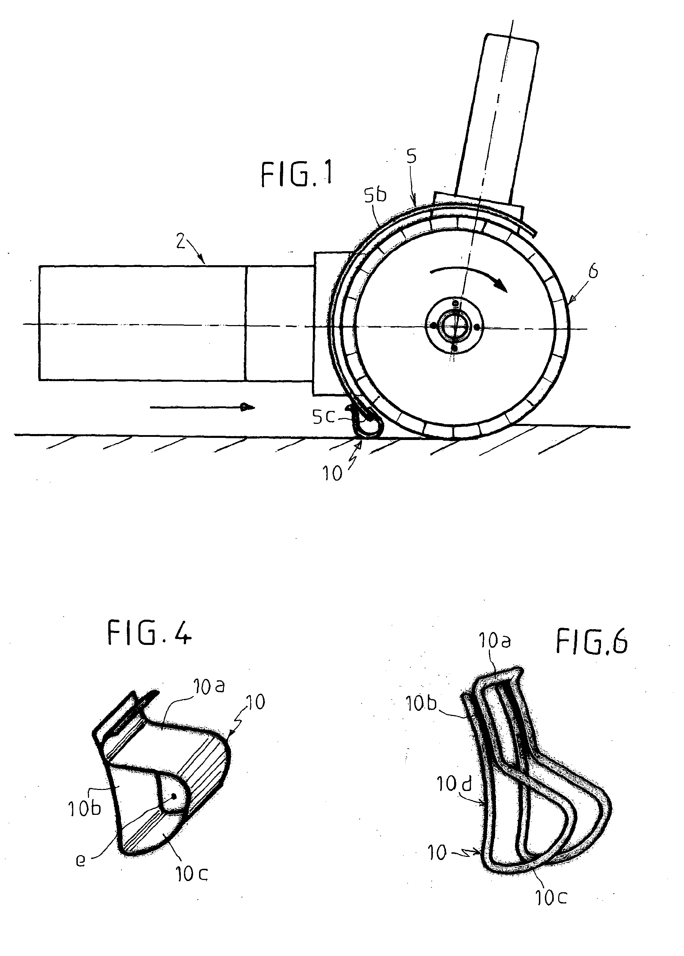

- La figure 1 est une vue d'un appareil électroportatif permettant le tronçonnage dit « à la volée », agencé avec le guide de verticalité selon l'invention.
- Les figures 2 et 3 sont des vues en perspective du guide de verticalité réalisé selon l'art antérieur.
- La figure 4 est une vue en perspective du guide de verticalité selon l'invention, dans une première mise en oeuvre de vue en perspective.
- La figure 5 est une vue illustrant le positionnement du guide selon l'invention sur la paroi de la bordure périphérique du carter précité.
- La figure 6 est une vue en variante de réalisation du guide.

Afin de rendre plus concret l'objet de l'invention, on le décrit maintenant d'une manière non limitative illustrée aux figures des dessins.

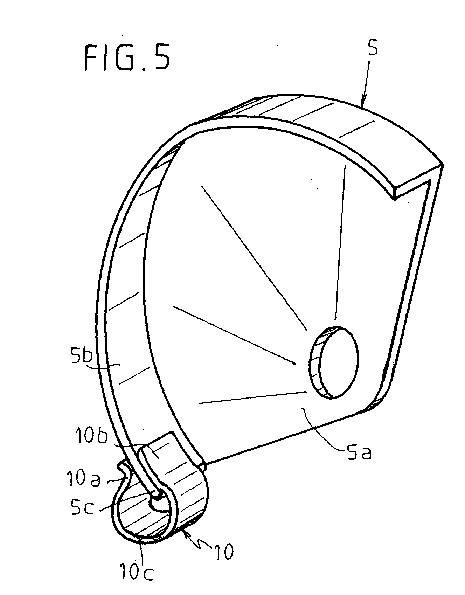

Le guide de verticalité est référencé dans son ensemble par (10). Il se présente sous la forme d'une agrafe métallique ou autre matériau, qui est profilée et conçue pour constituer d'une part, une zone de fixation et d'adaptation autour de la bande de dégagement (5c) de la bordure périphérique du carter (5) de protection de l'outil de coupe de l'appareillage électroportatif, et d'autre part pour avoir une fonctionnalité de pivot et de glissière. A cet effet, l'agrafe présente deux branches (10a, 10b) qui sont sensiblement jointives près de l'une des extrémités par élasticité, et qui se prolongent à l'arrière par une forme profilée (10c) arrondie formant pivot en définissant un espace (e) ou volume dans lequel pénètre la partie (5c) de bordure du carter précité. Les deux branches (10a, 10b) viennent ainsi prendre en sandwich la partie paroi considérée, tandis que la partie arrière (10e) formant pivot est destinée à venir prendre appui sur le produit (P) à découper. L'agrafe présente une certaine largeur de 1 à 4 cm, ce qui permet ainsi d'avoir une stabilité très précise et de garantir la verticalité de l'appareillage électroportatif du type précité. L'agrafe qui forme ainsi pince est d'une mise en oeuvre extrêmement aisée à fabriquer et à mettre en place et d'un coût dérisoire en regard des guides de verticalité de l'art antérieur. Cette agrafe peut ainsi présenter différentes variantes de réalisation, comme celles représentées figures 4 et 6. Cette agrafe peut être ainsi réalisée à partir d'une bande métallique méplate, continue, ou en variante à partir d'un ensemble de fils (10d) métalliques profilés et courbés assurant la fonction précitée.

L'agrafe selon l'invention offre de nombreux avantages par sa simplicité et son faible coût de fabrication, mais elle permet également, par sa configuration en pivot, de déporter sensiblement la zone de pivotement et de glissement par rapport à l'extrémité de la bordure du carter, permettant ainsi une rotation et pivotement effectués par l'opérateur pour assurer les différents mouvements nécessaires à une bonne coupe du produit. Il y a donc une profondeur de réglage de coupe qui est appréciée par l'opérateur lui-même agissant sur la poignée associée au carter de manière connue sur les appareils électroportatifs sur le marché. Par ailleurs, la forme profilée (10c) formant pivot assure une fonction de glissière et permer de tronçonner toutes longueurs avec une pénétration constante du disque à tronçonner dans la matière.

## Revendications

1. Guide de verticalité pour tronçonneuse, **caractérisé en ce qu'**il s'adapte à la fixation temporaire sur la bande de dégagement (5c) de la bordure périphérique (5b) d'un carter de protection (5) de l'outil de coupe de l'appareil électroportatif, et **en ce que** le guide (10) se présente sous la forme d'une agrafe à deux branches (10a, 10b), agencée pour s'engager élastiquement autour de la bande de dégagement (5c) de la bordure périphérique dudit carter et être maintenue en position, ladite agrafe présentant une forme profilée (10c) en prolongement formant un plan d'appui, de pivotement et de glissement sur le produit (P) à découper.

2. Guide de verticalité selon la revendication 1, **caractérisé en ce que** l'agrafe présente deux branches (10a, 10b) qui sont sensiblement jointives près de l'une des extrémités par élasticité, et qui se prolongent à l'arrière par une forme profilée (10c) arrondie formant pivot en définissant un espace (e) ou volume dans lequel pénètre la partie (5c) de bordure du carter, les deux branches venant prendre en sandwich la partie paroi considérée, et la partie arrière formant pivot prenant appui sur le produit (P) à découper.

3. Guide de verticalité selon la revendication 2, **caractérisé en ce que** l'agrafe présente une largeur de 1 à 4 cm.

4. Guide de verticalité selon l'une quelconque des revendications 1 à 3, **caractérisé en ce que** l'agrafe est réalisée à partir d'une bande métallique plate continue.

5. Guide de verticalité selon l'une quelconque des revendications 1 à 3, **caractérisé en ce que** l'agrafe est réalisée à partir d'un ensemble de fils (10d) métalliques.
